# EUROPEAN PATENT APPLICATION

(11) **EP 4 635 690 A1**
(43) Date of publication of application: **22.10.2025**
(21) Application number: 23902995.2
(22) Date of filing: 12.06.2023
(51) Int. Cl.: B25J 15/08, B25J 15/12

(54) **ROBOT HAND AND ROBOT ARM**

(30) Priority: 13.12.2022 JP 2022198813
(71) Applicant: BRIDGESTONE CORPORATION, Chuo-ku Tokyo 104-8340 (JP)
(72) Inventor: SAKAMOTO, Katsuya, Tokyo 104-8340 (JP)
(74) Representative: Marks & Clerk LLP
(86) International application number: PCT/JP2023/021795
(87) International publication number: WO 2024/127688

(57) **Abstract**

A robot hand including: plural finger members movable in directions to grip an object to be gripped; and a detector configured to detect a distance to a detection target that is a position deviated from trajectories along which the finger members move.

## Description

### Technical Field

The present disclosure relates to a robot hand and a robot arm.

### Background Art

Japanese Patent Application Laid-Open (JP-A) No. 2021-88999 has proposed a fluid pressure actuator including: a cylindrical tube that expands and contracts due to pressure of a fluid; a sleeve that has a stretchable structure in which a fiber cord oriented in a predetermined direction is interwoven and that covers an outer peripheral surface of the tube; a sealing member that seals an end of the tube in an axial direction of the tube; and a restraining member that is provided inside the sleeve from one end side to the other end side in the axial direction of the tube. The restraining member resists compression along the axial direction of the tube and is deformable in a perpendicular direction perpendicular to the axial direction.

### SUMMARY OF INVENTION

### Technical Problem

In a robot hand capable of gripping an object to be gripped, it may be required to dispose a detector such as a sensor in a portion corresponding to a palm so that the robot hand can confirm whether an object to be gripped has been correctly gripped and then proceed to a next motion.

However, for example, in a case where an optical detector is used, a finger member of the robot hand may be detected according to a detection position during a motion of gripping the robot hand. Thus, it may be difficult to distinguish between a correct gripped state and a non-gripped state and determine the states. In particular, in a curving-type robot hand like the technology disclosed in JP-A No. 2021-88999, a positional relationship of an object to be gripped will not be the same position in some cases due to a finger following the shape of the object to be gripped, and thus a gripping state sometimes cannot be correctly determined.

An object of the present disclosure is to provide a robot hand and a robot arm capable of correctly determining a gripping state.

### Solution to Problem

In order to achieve this object, a robot hand according to a first aspect includes: a plurality of finger members movable in directions to grip an object to be gripped; and a detector configured to detect a distance to a detection target that is a position deviated from trajectories along which the finger members move.

A robot hand according to a second aspect is the robot hand according to the first aspect, in which each finger member is a fluid pressure actuator configured to perform a curving motion.

A robot hand according to a third aspect is the robot hand according to the first or second aspect, further including a plurality of the detectors, in which the plurality of the detectors are configured to detect the distances to respective detection targets that are different positions deviated from the trajectories along which the finger members move.

A robot hand according to a fourth aspect is the robot hand according to the first or second aspect, in which the detector is configured to detect a plurality of regions, and set a region deviated from the trajectories along which the finger members move among the plurality of regions as the detection target.

A robot arm according to a fifth aspect includes: the robot hand according to any one of the first to fourth aspects; and a controller configured to determine whether or not the object to be gripped has been gripped based on a detection result of the detector, and perform control to move the object to be gripped in a case where the controller determines that the object to be gripped has been gripped.

### Advantageous Effects of Invention

According to the disclosure, there is an advantageous effect that it is possible to provide a robot hand and a robot arm capable of correctly determining a gripping state.

### BRIEF DESCRIPTION OF DRAWINGS

Fig. 1 is a view illustrating an overall image of a robot arm having a robot hand according to a present embodiment.
Fig. 2 is a side view explaining a finger member.
Fig. 3 is a diagram illustrating an example where a detector is disposed on a palm portion of the robot hand to detect a gripping state for an object to be gripped.
Fig. 4 is a diagram for explaining erroneous detection of the gripping state for an object to be gripped.
Fig. 5 is a diagram illustrating an example where the detector is disposed at a position to detect a position deviated from paths along which finger members move.
Fig. 6 is a block diagram illustrating a configuration of a control system of the robot arm according to the embodiment.
Fig. 7 is a flowchart illustrating an example of a flow of processing performed by a controller of the robot arm according to the embodiment.
Fig. 8 is a diagram illustrating an example of a robot hand according to a modification where a multi-zone TOF distance sensor is applied as a detector.
Fig. 9 is a diagram illustrating an example of a detection result of the detector to which the multi-zone TOF distance sensor is applied.

### DESCRIPTION OF EMBODIMENTS

Hereinafter, an example of an embodiment for implementing the technology of the present disclosure will be described in detail with reference to the drawings. In the drawings, the same or equivalent components and parts are denoted by the same reference numerals. Furthermore, dimensional ratios in the drawings may be exaggerated and different from actual ratios for convenience of explanation. The disclosure is in no way limited to the following embodiment, and can be modified and implemented within the scope of the object of the disclosure, if appropriate.

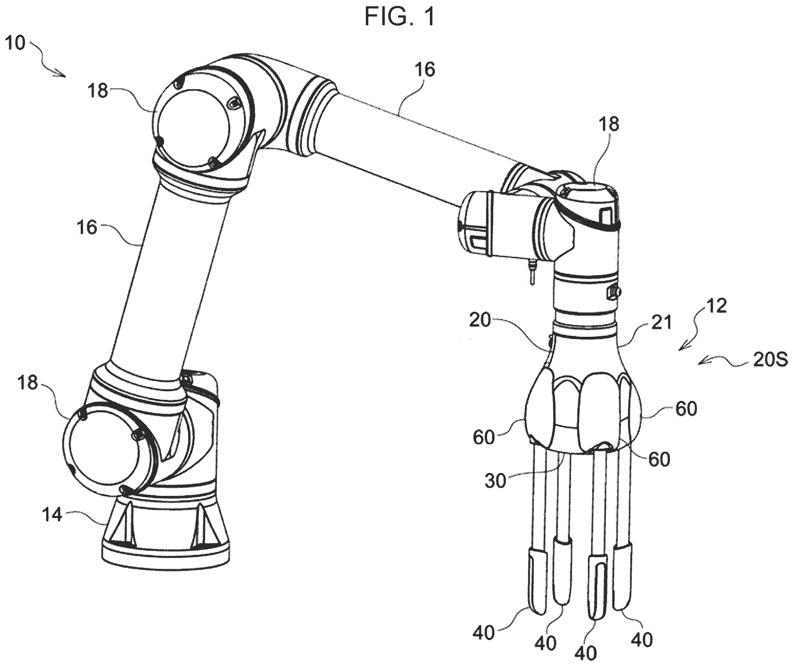

Fig. 1 is a view illustrating an overall image of a robot arm 10 having a robot hand 20 according to a present embodiment.

As illustrated in Fig. 1, the robot arm 10 includes a base 14 attached to a foundation (not illustrated), arm members 16, and joints 18 connecting the arm members 16 with each other or an arm member 16 with the base 14. The robot hand 20 is provided at the distal end of the connected arm members 16 via a joint 18.

In this robot arm 10, the robot hand 20 includes a robot hand support unit 21. The robot hand support unit 21 includes a plurality of attachment units 20S and a plurality of finger members 40, and portions of the attachment units 20S to which the finger members 40 are attached are covered with covers 60. The plurality of finger members 40 are movable in directions to grip an object to be gripped. Specifically, the finger member 40 moves in the direction toward an object to be gripped by being curved. This allows the robot arm 10 to grip an object to be gripped (not illustrated) by curving the finger members 40. The robot arm 10 moves the object to be gripped to a conveyance destination by rotating each joint 18 while gripping the object to be gripped and releases the state where the finger members 40 are curved, to convey the object to be gripped.

Note that the number and positions of the plurality of attachment units 20S and the plurality of finger members 40 are appropriately set according to an object to be gripped, the shape of the robot arm 10, and the like. In the embodiment as illustrated in Fig. 1, four finger members 40 as an example are attached to the robot hand 20 by respective finger member attachment structures 12.

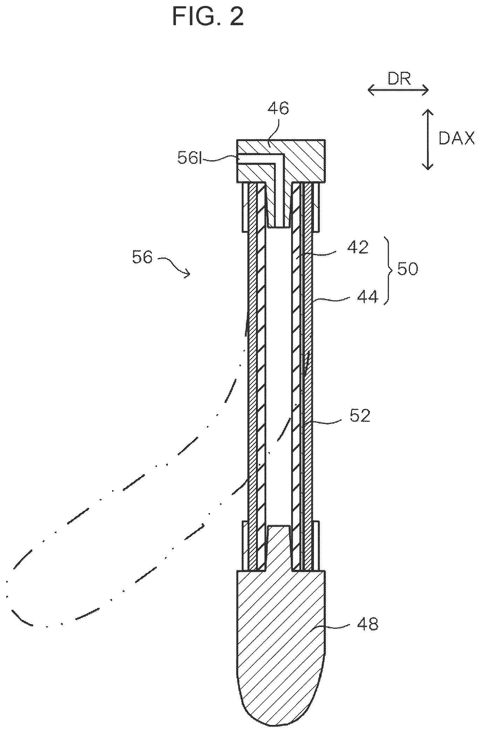

The finger member 40 according to the embodiment is a fluid pressure actuator 56 that performs a curving motion. The fluid pressure actuator 56, which is a so-called McKibben type actuator, is a member whose distal end (lower side in the view of Fig. 2) is curved as indicated by a two-dot chain line in Fig. 2 by a working fluid being introduced from an inlet 56I. The working fluid is appropriately determined according to an object to be gripped and the fluid pressure actuator 56, and compressed air is used as an example.

The fluid pressure actuator 56, to which the technology described in JP-A No. 2021-88999 is applied, for example, includes an actuator main body 50, a sealing mechanism 46, and a sealing mechanism 48.

The actuator main body 50 includes a tube 42 and a sleeve 44, and the fluid flows in through the inlet 56I.

In addition, a restraining member 52 is provided between the tube 42 and the sleeve 44. The restraining member 52 is not compressed in an axial direction DAX and is deformable only along a radial direction DR (bending direction). That is, the restraining member 52 resists compression along the axial direction DAX and is deformable in the perpendicular direction (radial direction DR) perpendicular to the axial direction DAX. In other words, the restraining member 52 hardly deforms along the axial direction DAX and has a property of bending along the radial direction DR. Note that the term "deformable" may be rephrased as "curvable" or "curlable".

The actuator main body 50, as a basic property, contracts in the axial direction DAX of the actuator main body 50 and expands in the radial direction DR due to inflow of the fluid into the tube 42. In addition, the actuator main body 50 expands in the axial direction DAX of the actuator main body 50 and contracts in the radial direction DR due to outflow of the fluid from the tube 42. Such a change in the shape of the actuator main body 50 causes the fluid pressure actuator 56 to function as an actuator.

The sealing mechanism 46 and the sealing mechanism 48 seal the both ends of the actuator main body 50 in the axial direction DAX. Differences between the sealing mechanism 46 and the sealing mechanism 48 are whether or not the inlet 56I is provided and their shape. The sealing mechanism 48 has a finger shape.

A hose, which is attached to the inlet 56I, is connected to a driving pressure source for the fluid pressure actuator 56, specifically, a gas or liquid compressor. The fluid flowing in through the inlet 56I passes through a passage hole (not illustrated) and flows into the actuator main body 50, specifically, the tube 42.

That is, when the actuator main body 50 tries to contract along the axial direction DAX due to inflow (pressurization) of the fluid into the actuator main body, a portion where the restraining member 52 is disposed cannot contract because of the high compressive stiffness of the restraining member 52. Meanwhile, the other portion of the actuator main body 50 tries to contract, resulting in the occurrence of a force in a curving direction along the perpendicular direction (radial direction DR), and the actuator main body 50 curves with the restraining member 52 as its backside.

By the way, in the robot hand 20 configured as described above, it may be required to confirm whether an object to be gripped has been correctly gripped and then proceed to a next motion.

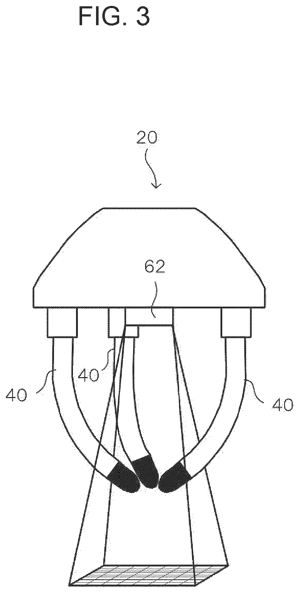

As illustrated in Fig. 3, it is thus considered to dispose a detector 62 such as a distance sensor on a palm portion of the robot hand 20 and detect a distance to an object to be gripped, thereby detecting whether or not the object to be gripped has been gripped. For example, the detector 62 detects the distance by emitting light and detecting reflected light. In a case where the detected distance is a threshold or less, a signal is turned on, and a gripping state is determined.

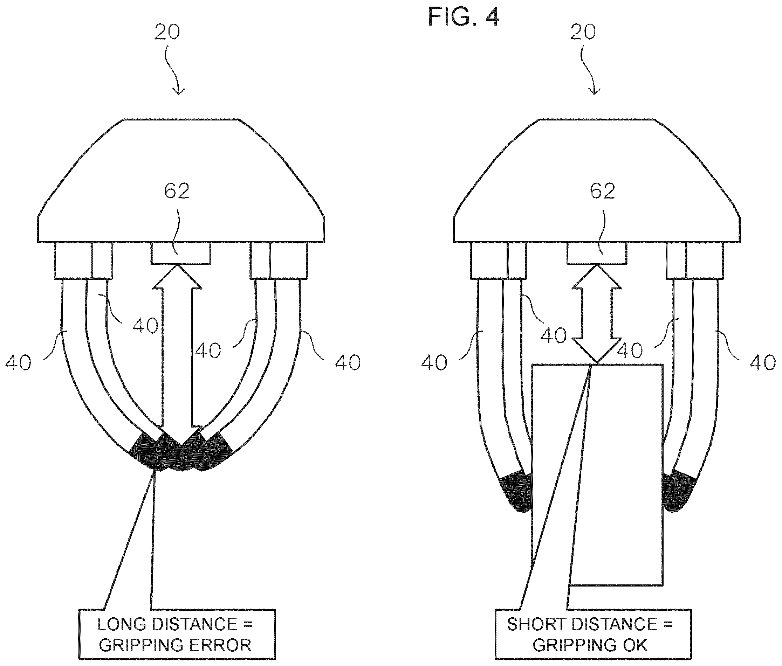

In a case where an optical sensor is applied as the detector 62, distinguishing between the correct gripped state and the non-gripped state with the sensor sometimes fails during a motion of gripping the robot hand 20. In particular, in the case of a curving-type soft hand finger, an object to be gripped will not be at the same position in some cases due to the finger following the shape of the object to be gripped, and thus the gripping state sometimes cannot be correctly determined. For example, as illustrated on the left side of Fig. 4, the distal end of a finger member 40 is detected and the signal is turned on based on a threshold for determining whether or not an object to be gripped has been gripped, which causes an erroneous determination of the gripping state. In another instance, as illustrated on the right side of Fig. 4, in a case where an object to be gripped is gripped at a distance of the threshold or greater, the signal is turned off while an object to be gripped is gripped, which causes an erroneous determination that the object to be gripped is not gripped.

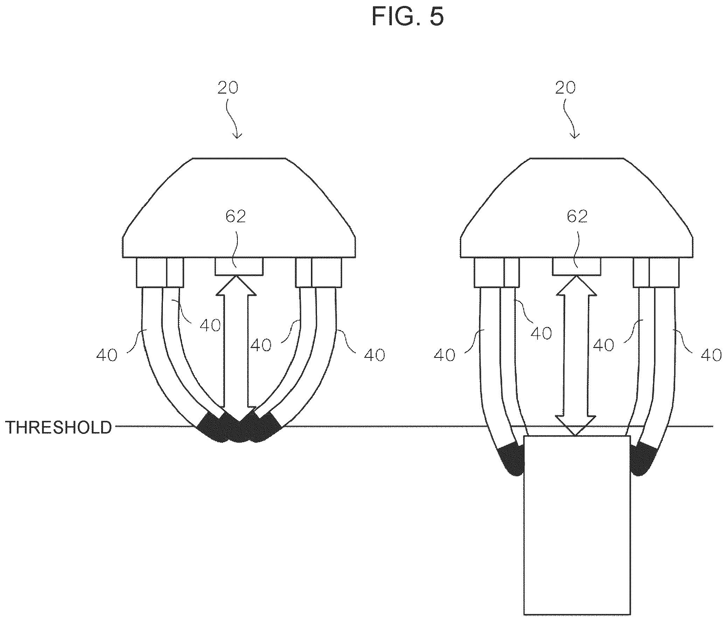

Thus in the embodiment, as illustrated in Fig. 5, the detector 62 is disposed at a position to detect a position deviated from paths along which the finger members 40 move. This prevents the detector 62 from detecting a finger member 40, whereby the signal is turned off and the finger members 40 are not erroneously detected as illustrated on the left side of Fig. 5, and gripping of an object to be gripped can be correctly determined as illustrated on the right side of Fig. 5. Although Fig. 5 illustrates an example where the single detector 62 is disposed, the number of detectors 62 is not limited to one, and may be two or more. In the case of a plurality of the detectors 62, each detector 62 may be disposed at a position deviated from the paths along which the respective finger members 40 move.

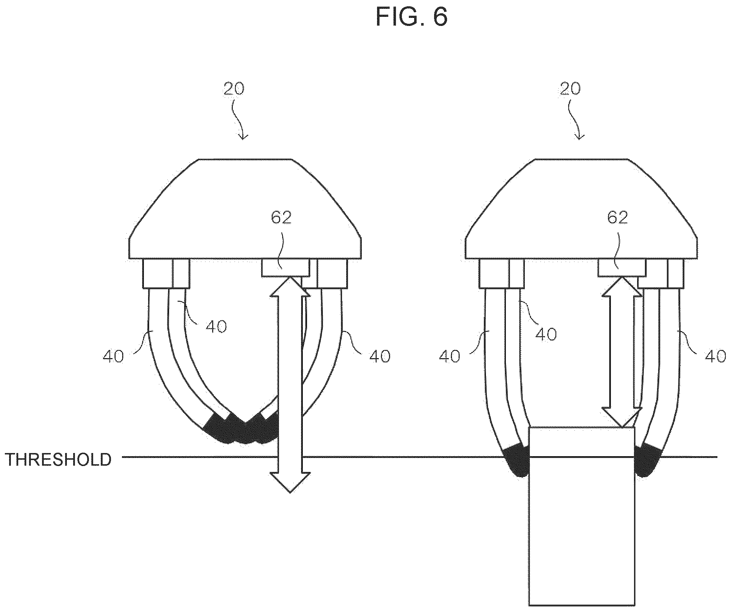

Next, a configuration of a control system of the robot arm 10 according to the embodiment will be described. Fig. 6 is a block diagram illustrating the configuration of the control system of the robot arm 10 according to the embodiment.

In the robot arm 10 according to the embodiment, the detector 62, a compressor 72, and a drive unit 74 are connected to a controller 70 as illustrated in Fig. 6.

The detector 62, to which an optical sensor that detects a distance is applied, is disposed at a position to detect a position deviated from the paths along which the finger members 40 move as described above. For example, a Time-of-Flight (TOF) contactless distance meter or a triangulation contactless distance meter is applied as the detector 62.

The compressor 72 forces compressed air into the tube 42 of the actuator main body 50 through the inlet 56I of the fluid pressure actuator 56, and causes the robot hand 20 to perform the gripping motion.

The drive unit 74, which is a drive source that drives the robot arm 10, rotates each joint 18, thereby moving an object to be gripped to a conveyance destination or the like. A motor actuator, a hydraulic actuator, a pneumatic actuator, or the like is applied to the drive unit 74.

The controller 70 includes, for example, a computer having a central processing unit (CPU), a read only memory (ROM), a random access memory (RAM), an input/output interface (I/O), and the like that are connected to a bus. The controller 70 drives the compressor 72, thereby driving the fluid pressure actuators 56 of the robot hand 20 and controlling the gripping motion. In addition, the controller 70 acquires a detection result of the detector 62 and determines whether or not an object to be gripped has been gripped based on the detection result. Then, in a case where the gripping state for an object to be gripped is detected, the controller 70 drives the drive unit 74 and performs control to move the object to be gripped to a conveyance destination or the like.

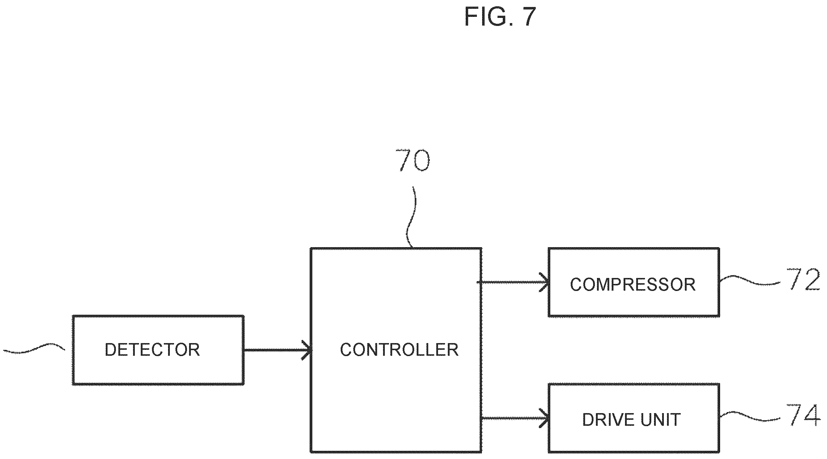

Next, specific processing performed by the controller 70 of the robot arm 10 according to the embodiment configured as described above will be described. Fig. 7 is a flowchart illustrating an example of a flow of the processing performed by the controller 70 of the robot arm 10 according to the embodiment. That the processing in Fig. 7 starts, for example, in a case where an instruction for gripping an object to be gripped is issued, the compressor 72 is driven, and then the compressed air has reached a predetermined pressure.

In step 100, the controller 70 causes the detector 62 to perform distance detection, and proceeds to step 102. That is, the detector 62 emits light therefrom and detects reflected light. In the embodiment, since the detector 62 is disposed at a position deviated from the paths along which the finger members 40 move, reflected light from an object to be gripped can be reliably detected.

In step 102, the controller 70 acquires a detection result of the detector 62 and proceeds to step 104.

In step 104, the controller 70 determines whether or not a detection distance is a predetermined threshold or less. In a case where the determination is negative, the controller 70 proceeds to step 106, and in a case where the determination is positive, the controller 70 proceeds to step 110.

In step 106, the controller 70 determines that gripping of an object to be gripped has failed and proceeds to step 108.

In step 108, the controller 70 performs a re-gripping motion, and returns to step 100 described above to repeat the above-described processing. In the re-gripping motion, for example, the pressure of the compressor 72 is released to eliminate the curve of the finger members, and the robot arm 10 is moved in the direction toward the object to be gripped or the like. Then, the compressor 72 is re-driven, the finger members are curved, and the motion of gripping the object to be gripped is performed again.

In step 110, the controller 70 determines that gripping of an object to be gripped is successful and proceeds to step 112.

In step 112, the controller 70 proceeds to a next motion and ends the series of the processing. For example, the controller 70 drives the drive unit 74 and causes it to rotate each joint 18, thereby moving the object to be gripped to a conveyance destination.

In the robot hand 20 according to the embodiment, the detector 62 for detecting the gripping state for an object to be gripped is disposed at a position to detect a position deviated from the paths along which the finger members 40 move. Therefore, the finger members 40 are not erroneously detected as an object to be gripped. This allows setting the threshold at a position farther than the positions of the distal ends of the finger members in a state where each finger member 40 of the robot hand 20 is curved, that is, in the gripping state where each finger member 40 of the robot hand 20 is closed without gripping an object to be gripped as illustrated in Fig. 5. Therefore, it becomes possible to correctly determine whether or not an object to be gripped has been gripped.

Furthermore, it is possible to correctly determine whether or not an object to be gripped has been gripped regardless of the shape or size of the object to be gripped.

In the embodiment, an example where a single or a plurality of the detectors 62 are used has been described. However, a multi-zone TOF distance sensor that detects a plurality of regions may be applied as a detector 62.

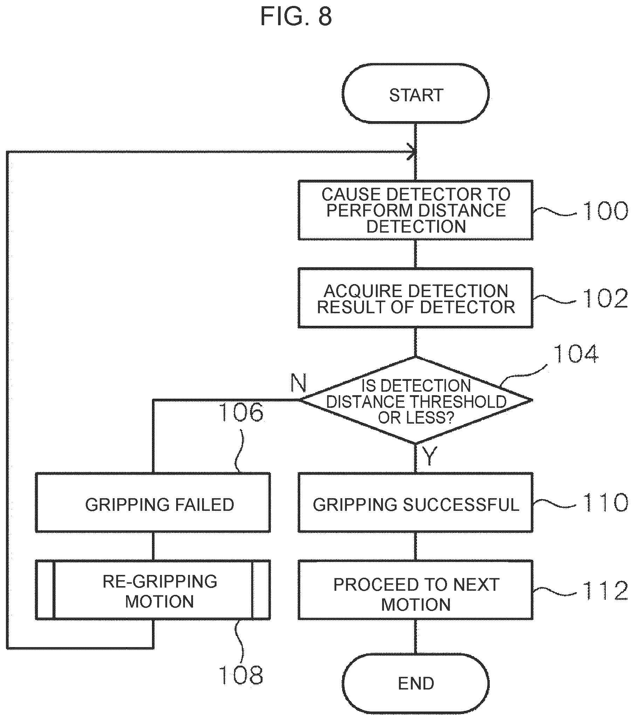

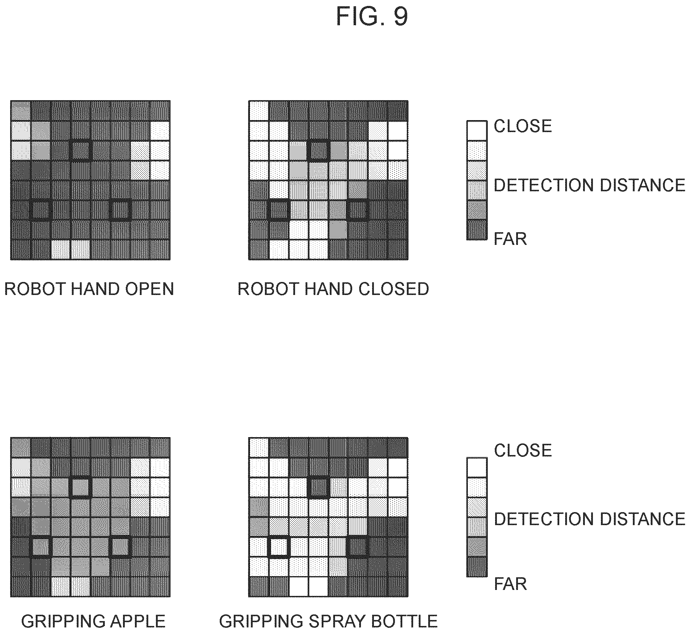

For example, as illustrated in Fig. 8, the detector 62 is disposed at the center position of the palm portion of the robot hand 20 and detects a plurality of regions. For example, an 8×8 multi-zone distance sensor is used to detect 8×8 regions. Then, the gripping state is determined using a region (zone) at a position deviated from the paths along which the finger members 40 move as a detection target. Fig. 8 is a diagram illustrating an example of a robot hand 20 according to a modification where a multi-zone TOF distance sensor is applied as a detector 62. Fig. 8 illustrates an example of the robot hand 20 including three finger members 40. Fig. 9 is a diagram illustrating an example of a detection result of the detector 62 to which the multi-zone TOF distance sensor is applied.

For example, as illustrated in Fig. 9, three regions (thick frame lines in Fig. 9), at which nothing is detected in each of a case where the robot hand 20 is open and a case where it is closed, are set as detection targets.

As a result, in the case of gripping an apple, it is possible to detect that the apple is gripped based on the three regions set as the detection targets as illustrated in Fig. 9. The gripping state for a spray bottle can also be detected based on one of the three regions set as the detection targets.

In this manner, applying a detector 62 that detects a plurality of regions makes it possible to confirm gripping for various objects to be gripped with the one detector 62.

In the embodiment, an example where the finger member 40 is configured by the fluid pressure actuator 56 has been described. However, the finger member 40 is not limited thereto. For example, a mechanical finger member 40 driven by a motor or the like may be applied, or a finger member 40 having another configuration may be applied.

In the embodiment, an example where the single detector 62 is used has been described. As another embodiment, in the case of using a plurality of the detectors 62, the plurality of the detectors 62 may be provided at positions to detect positions each deviated from the trajectories along which the finger members 40 move, and a detector 62 to be used may be switched depending on an object to be gripped. As another embodiment, in the case of using a multi-zone TOF distance sensor, a region set as a detection target may be switched depending on an object to begripped.

The processing executed by the CPU reading software (program) in the embodiment may be executed by various processors other than the CPU. Examples of the processors in this case include a programmable logic device (PLD) of which a circuit configuration can be changed after manufacturing, such as a field-programmable gate array (FPGA), and a dedicated electric circuit that is a processor having a circuit configuration specifically designed for executing specific processing, such as an application specific integrated circuit (ASIC). The processing may be executed by one of these various processors, or may be executed by any combination of two or more processors of the same type or different types (for example, a combination of a plurality of FPGAs, a combination of a CPU and an FPGA, and the like). More specifically, a hardware structure of these various processors is an electric circuit in which circuit elements such as semiconductor elements are combined.

In the embodiment, the program may be stored in advance in the ROM. Alternatively, in a case where the controller 70 has a storage, the program may be provided to the controller 70 in a form stored in a non-transitory storage medium such as a compact disk read only memory (CD-ROM), a digital versatile disk read only memory (DVD-ROM), or a universal serial bus (USB) memory, and may be installed in the storage. As another embodiment, the program may be downloaded from an external device via a network.

Furthermore, the technical scope of the disclosure is not limited to the scope described in the embodiments described above. Various modifications or improvements can be made to the embodiments without departing from the gist, and the modified or improved embodiments are also included in the technical scope of the present disclosure.

All documents, patent applications, and technical standards described in this specification are incorporated herein by reference to the same extent as in the case of being specifically and individually noted that the individual documents, patent applications, and technical standards are incorporated by reference. The disclosure of Japanese Patent Application No. 2022-198813 filed on December 13, 2022 is incorporated herein by reference in its entirety.

## Claims

1. A robot hand comprising:
a plurality of finger members movable in directions to grip an object to be gripped;
and
a detector configured to detect a distance to a detection target that is a position deviated from trajectories along which the finger members move.

2. The robot hand according to claim 1, wherein each finger member is a fluid pressure actuator configured to perform a curving motion.

3. The robot hand according to claim 1 or 2, further comprising a plurality of the detectors, wherein the plurality of the detectors are configured to detect the distances to respective detection targets that are different positions deviated from the trajectories along which the finger members move.

4. The robot hand according to claim 1 or 2, wherein the detector is configured to detect a plurality of regions, and set a region deviated from the trajectories along which the finger members move among the plurality of regions as the detection target.

5. A robot arm comprising:
the robot hand according to any one of claims 1 to 4; and
a controller configured to determine whether or not the object to be gripped has been gripped based on a detection result of the detector, and perform control to move the object to be gripped in a case where the controller determines that the object to be gripped has been gripped.
